# FASCICULE DE BREVET EUROPEEN

(11) **EP 3 715 613 B1**
(45) Date de publication et mention de la délivrance du brevet: **04.05.2022**
(21) Numéro de dépôt: 20164122.2
(22) Date de dépôt: 19.03.2020
(51) Int. Cl.: F02K 1/72

(54) **TURBOREACTEUR DOUBLE FLUX COMPORTANT UNE SERIE DE LAMES ROTATIVES POUR OBTURER LA VEINE DU FLUX SECONDAIRE**
DOPPELSTROM-TURBOTRIEBWERK, DAS EINE REIHE VON ROTIERENDEN SCHAUFELBLÄTTERN UMFASST, UM DEN KANAL DES SEKUNDÄRSTROMS ABZUDICHTEN
DUAL-FLOW TURBOJET ENGINE COMPRISING A SERIES OF ROTARY STRIPS FOR BLOCKING THE SECONDARY FLOW STREAM

(30) Priorité: 25.03.2019 FR 1903068
(43) Date de publication de la demande: 30.09.2020
(73) Titulaire: AIRBUS OPERATIONS, 31060 Toulouse Cedex 9 (FR)
(72) Inventeur: GARDES, Pascal, 31530 LEVIGNAC (FR); COUSIN, Antoine, 31240 L'UNION (FR); BOUDOU, Antoine, 31300 TOULOUSE (FR)
(74) Mandataire: Cabinet Le Guen Maillet

(56) Documents cités:
- DE-A1- 1 937 679
- FR-A1- 3 067 760
- US-A- 2 933 890
- US-A1- 2017 198 658

## Description

### DOMAINE TECHNIQUE

La présente invention concerne un turboréacteur double flux qui comporte une série de lames qui sont montées rotatives pour obturer la veine du flux secondaire, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée. En outre, le déplacement de chaque porte d'inversion est réalisé à l'aide d'une bielle qui traverse la veine secondaire en position escamotée et qui obstrue donc partiellement la veine secondaire.

Bien que les portes d'inversion donnent entière satisfaction, il est souhaitable de trouver des mécanismes différents, en particulier des mécanismes moins lourds et qui ne présentent aucune obstruction du flux secondaire en position escamotée.

Les documents FR-A-3 067 760, US-A-2017/198658, US-A-2,933,890 et DE-A-19 37 679 divulguent des turboréacteurs de l'état de la technique.

### EXPOSE DE L'INVENTION

Un objet de la présente invention est de proposer un turboréacteur double flux qui comporte une série de lames qui sont montées rotatives pour obturer la veine du flux secondaire.

A cet effet, est proposé un turboréacteur double flux présentant un axe longitudinal et comportant un moteur et une nacelle entourant le moteur qui comporte un carter de soufflante, où une veine d'un flux secondaire est délimitée entre la nacelle et le moteur et dans laquelle un flux d'air circule selon un sens d'écoulement, ladite nacelle comportant :
- une structure fixe fixée au carter de soufflante,
- un ensemble mobile présentant un capot mobile et un coulisseau, le capot mobile étant fixé au coulisseau, le coulisseau étant mobile en translation sur la structure fixe selon une direction de translation entre une position avancée dans laquelle le coulisseau est positionné de manière à ce que le capot mobile soit rapproché du carter de soufflante et une position reculée dans laquelle le coulisseau est positionné de manière à ce que le capot mobile soit éloigné du carter de soufflante pour définir entre eux une fenêtre ouverte entre la veine et l'extérieur de la nacelle, et
- un ensemble d'actionneurs assurant le déplacement du coulisseau entre la position avancée et la position reculée, et inversement,
le turboréacteur double flux étant caractérisé en ce que la nacelle comporte en outre :
- une pluralité de lames, chacune comportant une première extrémité montée mobile en rotation sur le coulisseau autour d'un axe de rotation et où les lames sont décalées angulairement de proche en proche autour de l'axe longitudinal, où chaque lame est mobile entre une position escamotée dans laquelle la lame est en dehors de la veine et une position déployée dans laquelle la lame est en travers de la veine, et
- un système de manœuvre destiné à déplacer chaque lame de la position escamotée à la position déployée et inversement, où le système de manœuvre comporte :
- pour chaque lame, un arbre monté mobile en rotation sur le coulisseau autour d'un axe de rotation, et sur lequel la lame est fixée,
- pour chaque arbre, un bras qui présente une première extrémité fixée à l'arbre et une deuxième extrémité,
- un arc coaxial avec l'axe longitudinal, monté mobile en rotation sur le coulisseau autour de l'axe longitudinal,
- pour chaque bras, un levier monté articulé entre l'arc et la deuxième extrémité du bras, et
- un système d'actionnement qui réalise la mise en rotation de l'arc dans un sens et dans l'autre. Un tel turboréacteur permet une réduction de masse en remplaçant les portes d'inversion et leurs mécanismes d'entraînement par des lames pivotantes plus légères avec un système de manœuvre simplifié.

Avantageusement, la première extrémité de chaque bras prend la forme d'une paire de pinces qui enserrent l'arbre et comportent une vis de serrage qui serre les deux pinces l'une vers l'autre. L'invention propose également un aéronef comportant au moins un turboréacteur double flux selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un turboréacteur double flux selon l'invention,
[Fig. 2] est une vue en perspective du turboréacteur double flux selon l'invention en position avancée et escamotée,
[Fig. 3] est une vue en perspective du turboréacteur double flux selon l'invention, en position reculée et déployée,
[Fig. 4] est une représentation schématique d'un turboréacteur double flux selon l'invention vu en coupe par un plan vertical, et
[Fig. 5] est une vue en perspective d'un système de manœuvre selon l'invention.

### EXPOSE DETAILLE DE MODES DE REALISATION

Dans la description qui suit, les termes relatifs à une position sont pris en référence au sens d'écoulement de l'air dans un turboréacteur qui s'écoule donc de l'avant vers l'arrière de l'aéronef.

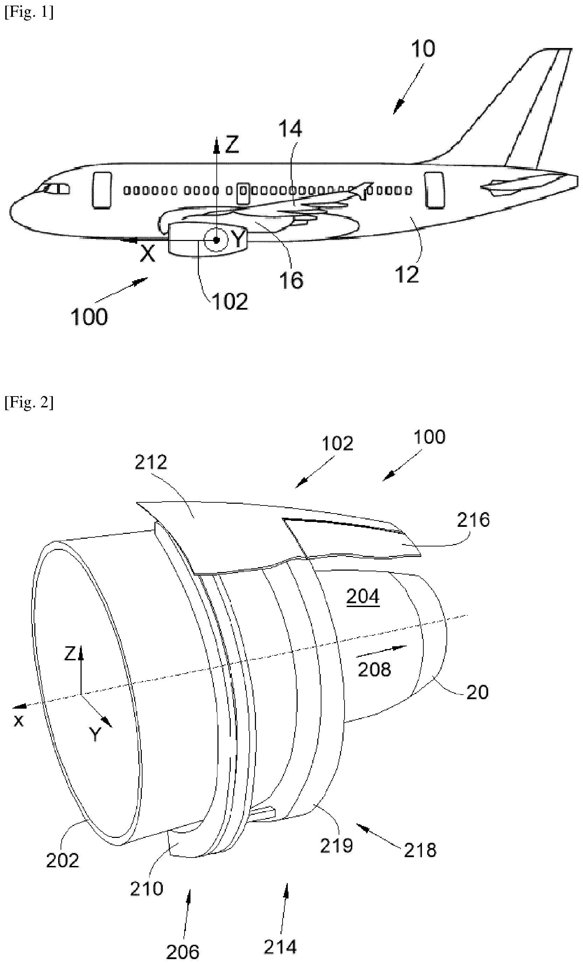

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

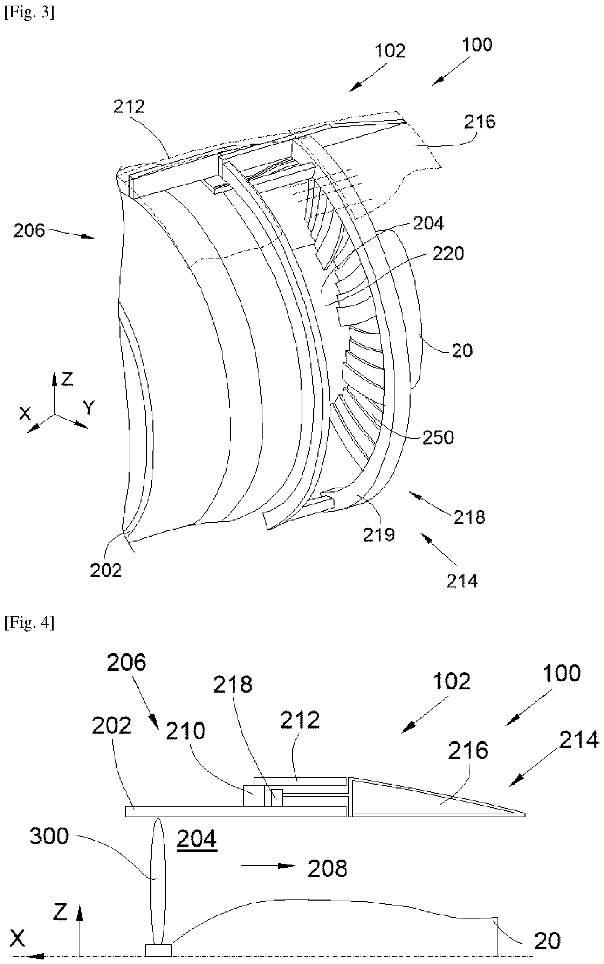

La Fig. 2 et la Fig. 3 montrent le turboréacteur double flux 100 qui présente une nacelle 102 et un moteur 20 qui est logé à l'intérieur de la nacelle 102 et qui comporte un carter de soufflante 202. Le moteur 20 est matérialisé par sa partie arrière d'éjection.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

La Fig. 2 et la Fig. 3 montrent le turboréacteur double flux 100 dans deux positions d'utilisation différentes et la Fig. 4 montre une représentation schématique en coupe du turboréacteur double flux 100.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière.

La nacelle 102 présente une structure fixe 206 qui est montée fixe sur le carter de soufflante 202. La structure fixe 206 est composée en particulier ici d'un cadre avant 210 monté autour du carter de soufflante 202 et de panneaux extérieurs 212 formant une surface aérodynamique qui sont montrés en transparence sur la Fig. 3 et dont une partie est découpée sur les Figs. 2 et 3.

La nacelle 102 présente un ensemble mobile 214 qui présente un capot mobile 216 (également en transparence sur la Fig. 3) dont une partie est découpée sur les Figs. 2 et 3 et qui forme les parois extérieures de la tuyère.

La nacelle 102 présente également un coulisseau 218. Le coulisseau 218 prend ici la forme d'un cylindre à parois ajourées. Le capot mobile 216 est fixé au et en aval du coulisseau 218 par rapport au sens d'écoulement du flux d'air dans le turboréacteur double flux 100.

Le coulisseau 218 est monté mobile en translation selon une direction de translation globalement parallèle à l'axe longitudinal X sur la structure fixe 206 de la nacelle 102.

Le coulisseau 218 est mobile entre une position avancée (Fig. 2) et une position reculée (Fig. 3) et inversement. En position avancée, le coulisseau 218 est positionné le plus en avant possible par rapport au sens d'écoulement de manière à ce que le capot mobile 216 soit rapproché des panneaux extérieurs 212 et du carter de soufflante 202 et forme ainsi une surface aérodynamique. En position reculée, le coulisseau 218 est positionné le plus en arrière possible par rapport au sens d'écoulement de manière à ce que le capot mobile 216 soit éloigné des panneaux extérieurs 212 et du carter de soufflante 202 de manière à définir entre eux une fenêtre 220.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204.

En position reculée, le capot mobile 216 et le carter de soufflante 202 ainsi que les panneaux extérieurs 212 sont à distance et définissent entre eux la fenêtre 220 ouverte entre la veine 204 et l'extérieur de la nacelle 102. C'est-à-dire que l'air du flux secondaire 208 traverse la fenêtre 220 pour rejoindre l'extérieur du turboréacteur double flux 100.

La translation du coulisseau 218 est réalisée par tous moyens appropriés, comme par exemple, des systèmes de glissières entre la structure fixe 206 et le coulisseau 218.

La nacelle 102 comporte également un ensemble d'actionneurs (non représentés) assurant le déplacement en translation du coulisseau 218 entre la position avancée et la position reculée et inversement. Chaque actionneur est commandé par une unité de contrôle, par exemple du type processeur, qui commande les déplacements dans un sens ou dans l'autre selon les besoins de l'aéronef 10.

Chaque actionneur peut prendre par exemple la forme d'un vérin à double effet (deux directions de travail) dont le cylindre est fixé à la structure fixe 206 et une tige fixée au coulisseau 218. Afin d'orienter le flux d'air sortant de la fenêtre 220, des cascades peuvent être fixées sur le coulisseau 218 en regard de la fenêtre 220.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

La nacelle 102 comporte une pluralité de lames 250, chacune étant montée mobile en rotation sur le coulisseau 218 autour d'un axe de rotation qui est ici globalement parallèle à l'axe longitudinal X. Chaque lame 250 est ainsi mobile entre une position escamotée (Fig. 2) dans laquelle la lame 250 est en dehors de la veine 204 et une position déployée (Fig. 3) dans laquelle la lame 250 est en travers de la veine 204 afin de dévier le flux secondaire 208 vers la fenêtre 220.

Chaque lame 250 est montée mobile au niveau d'une première extrémité tandis qu'une deuxième extrémité se rapproche du moteur 20 lorsque la lame 250 est déployée afin d'obturer au mieux la veine 204.

Les lames 250 sont décalées angulairement de proche en proche autour de l'axe longitudinal X. Le nombre de lames 250 ainsi que la forme de chacune d'elles dépendent des dimensions du turboréacteur double flux 100 ainsi que de la largeur de chaque lame 250 afin qu'en position déployée, les lames 250 obturent la plus grande partie de la veine 204.

Le passage de la position escamotée à la position déployée s'effectue par une rotation de la lame 250 vers l'intérieur du turboréacteur 100.

La position escamotée peut être adoptée lorsque le coulisseau 218 est en position avancée ou en position reculée. La position déployée ne peut être adoptée que lorsque le coulisseau 218 est en position reculée.

Le coulisseau 218 porte également un système de manœuvre 400 qui déplace chaque lame 250 de la position escamotée à la position déployée.

Le fonctionnement consiste ainsi, à partir de la position avancée/escamotée, à commander l'activation des actionneurs pour déplacer le coulisseau 218 de la position avancée à la position reculée. Au cours ou à la fin de ce déplacement, le système de manœuvre 400 déplace les lames 250 de la position escamotée à la position déployée.

A l'inverse, le fonctionnement consiste ainsi, à partir de la position reculée/déployée, à commander l'activation des actionneurs pour déplacer le coulisseau 218 de la position reculée à la position avancée. Au cours ou au début de ce déplacement, le système de manœuvre 400 déplace les lames 250 de la position déployée à la position escamotée.

L'utilisation des lames 250 montées rotatives sur le coulisseau 218 permet un allégement de l'ensemble par rapport à l'utilisation de portes d'inversion de l'état de la technique.

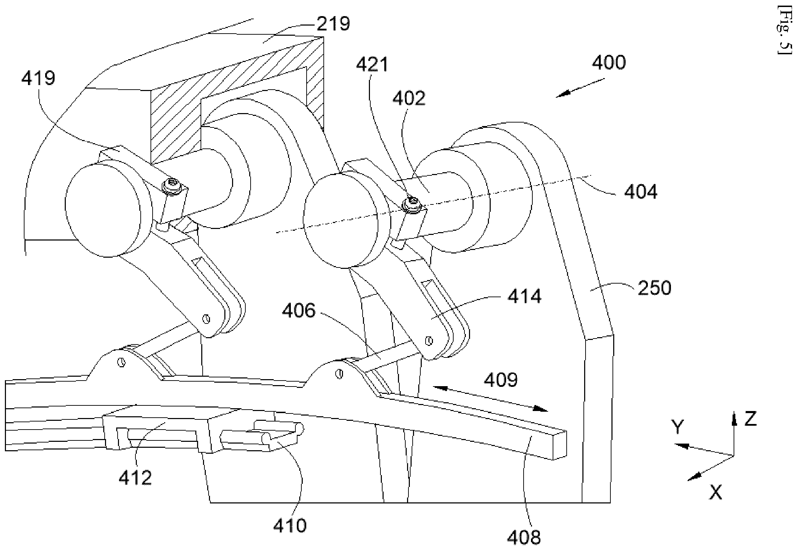

La Fig. 5 montre le système de manœuvre 400 sur l'ensemble mobile 214 et plus particulièrement sur le coulisseau 218.

Pour chaque lame 250, le système de manœuvre 400 comporte un arbre 402 qui est monté mobile en rotation sur le coulisseau 218 autour d'un axe de rotation 404, et sur lequel la lame 250 est fixée. Sur la Fig. 5, chaque lame 250 est tronquée pour faciliter la compréhension du mécanisme et seules deux lames 250 sont montrées. En outre, sur la Fig. 5, le coulisseau 218 est vu en coupe. L'axe de rotation 404 est ici globalement parallèle à l'axe longitudinal X.

Pour chaque arbre 402, le système de manœuvre 400 comporte également un bras 414 qui présente une première extrémité fixée à l'arbre 402 et une deuxième extrémité.

Le système de manœuvre 400 comporte également un arc 408 qui est coaxial avec l'axe longitudinal X. L'arc 408 est monté mobile en rotation (double flèche 409) sur l'ensemble mobile 214 et plus particulièrement sur le coulisseau 218 autour de l'axe longitudinal X.

Le système de manœuvre 400 comporte également un système d'actionnement qui réalise la mise en rotation de l'arc 408 dans un sens et dans l'autre. Dans le mode de réalisation de l'invention présenté sur la Fig. 5, le système d'actionnement est réalisé à l'aide d'un rail 410 qui suit la courbe souhaitée et d'au moins un chariot 412, où chaque chariot 412 est solidaire de l'arc 408 et est monté coulissant sur le rail 410. Le rail 410 est monté fixe sur l'ensemble mobile 214. Le système d'actionnement comprend également tous moyens moteur appropriés permettant d'assurer le déplacement du ou des chariots 412 le long du rail 410, comme par exemple un vérin monté articulé entre un chariot 412 et l'ensemble mobile 214, un moteur équipé d'une crémaillère, etc. L'unité de contrôle commande également les moyens moteur.

La liaison entre le chariot 412 et le rail 410 prend ici la forme d'une double queue d'aronde.

Pour chaque bras 414, c'est-à-dire chaque lame 250, le système de manœuvre 400 comporte également un levier 406 monté articulé entre l'arc 408 et la deuxième extrémité du bras 414. Chaque articulation du levier 406 prend ici la forme d'une liaison pivot autour d'un axe parallèle à l'axe de rotation 404.

Ainsi, un déplacement en rotation de l'arc 408 entraîne chaque levier 406 et par voie de conséquence, la rotation de chaque bras 414 et donc de l'arbre 402 et de la lame 250 associés. Chaque lame 250 s'étend dans un plan globalement perpendiculaire à l'axe longitudinal X. Chaque lame 250 est montée mobile sur le pourtour du coulisseau 218. Lorsque les lames 250 sont en position escamotée, elles se superposent selon l'axe longitudinal X.

Le déplacement de toutes les lames 250 est alors relativement simple à mettre en œuvre car il suffit d'effectuer une rotation de l'arc 408.

Dans le mode de réalisation de l'invention présenté sur la Fig. 5, la première extrémité de chaque bras 414 prend la forme d'une paire de pinces 419 qui enserrent l'arbre 402 et qui comportent une vis de serrage 421 qui serre les deux pinces l'une vers l'autre. Il est ainsi possible de régler indépendamment chaque lame 250.

Dans le mode de réalisation de l'invention présenté à la Fig. 5, le coulisseau 218 comporte un profilé en U 219 coaxial avec l'axe longitudinal X et ouvert vers l'axe longitudinal X. Le profilé en U 219 forme une cage à l'intérieur de laquelle les lames 250 sont montées mobiles en rotation et où les arbres 402 traversent une paroi du profilé en U 219.

L'invention a été plus particulièrement décrite dans le cas d'une nacelle sous une aile mais elle peut s'appliquer à une nacelle située à l'arrière du fuselage.

## Revendications

1. Turboréacteur double flux (100) présentant un axe longitudinal (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule selon un sens d'écoulement, ladite nacelle (102) comportant :
- une structure fixe (206) fixée au carter de soufflante (202),
- un ensemble mobile (214) présentant un capot mobile (216) et un coulisseau (218), le capot mobile (216) étant fixé au coulisseau (218), le coulisseau (218) étant mobile en translation sur la structure fixe (206) selon une direction de translation entre une position avancée dans laquelle le coulisseau (218) est positionné de manière à ce que le capot mobile (216) soit rapproché du carter de soufflante (202) et une position reculée dans laquelle le coulisseau (218) est positionné de manière à ce que le capot mobile (216) soit éloigné du carter de soufflante (202) pour définir entre eux une fenêtre (220) ouverte entre la veine (204) et l'extérieur de la nacelle (102), et
- un ensemble d'actionneurs assurant le déplacement du coulisseau (218) entre la position avancée et la position reculée, et inversement,
le turboréacteur double flux (100) étant **caractérisé en ce que** la nacelle (102) comporte en outre :
- une pluralité de lames (250), chacune comportant une première extrémité montée mobile en rotation sur le coulisseau (218) autour d'un axe de rotation et où les lames (250) sont décalées angulairement de proche en proche autour de l'axe longitudinal (X), où chaque lame (250) est mobile entre une position escamotée dans laquelle la lame (250) est en dehors de la veine (204) et une position déployée dans laquelle la lame (250) est en travers de la veine (204), et
- un système de manœuvre (400) destiné à déplacer chaque lame (250) de la position escamotée à la position déployée et inversement, où le système de manœuvre (400) comporte :
- pour chaque lame (250), un arbre (402) monté mobile en rotation sur le coulisseau (218) autour d'un axe de rotation (404), et sur lequel la lame (250) est fixée,
- pour chaque arbre (402), un bras (414) qui présente une première extrémité fixée à l'arbre (402) et une deuxième extrémité,
- un arc (408) coaxial avec l'axe longitudinal (X), monté mobile en rotation sur le coulisseau (218) autour de l'axe longitudinal (X),
- pour chaque bras (414), un levier (406) monté articulé entre l'arc (408) et la deuxième extrémité du bras (414), et
- un système d'actionnement qui réalise la mise en rotation de l'arc (408) dans un sens et dans l'autre.

2. Turboréacteur double flux (100) selon la revendication 1, **caractérisé en ce que** la première extrémité de chaque bras (414) prend la forme d'une paire de pinces (419) qui enserrent l'arbre (402) et comportent une vis de serrage (421) qui serre les deux pinces l'une vers l'autre.

3. Aéronef (10) comportant au moins un turboréacteur double flux (100) selon l'une des revendications précédentes.

## Patentansprüche

1. Zweistrom-Turbinenstrahltriebwerk (100) mit einer Längsachse (X), umfassend einen Antrieb (20) und eine den Antrieb (20) umgebende Gondel (102), die ein Gebläsegehäuse (202) aufweist, wobei zwischen der Gondel (102) und dem Antrieb (20) eine Bahn (204) eines Sekundärstroms (208) begrenzt ist und wobei ein Luftstrom in einer Strömungsrichtung zirkuliert, wobei die Gondel (102) Folgendes aufweist:
- eine am Gebläsegehäuse (202) befestigte feste Struktur (206),
- eine bewegliche Anordnung (214), die eine bewegliche Abdeckung (216) und einen Schieber (218) aufweist, wobei die bewegliche Abdeckung (216) am Schieber (218) befestigt ist, wobei der Schieber (218) an der festen Struktur (206) in einer Translationsrichtung zwischen einer vorgeschobenen Position, in der der Schieber (218) so positioniert ist, dass die bewegliche Abdeckung (216) dem Gebläsegehäuse (202) angenähert ist, und einer zurückgezogenen Position, in der der Schieber (218) so positioniert is, dass die bewegliche Abdeckung (216) vom Gebläsegehäuse (202) entfernt ist, um dazwischen ein offenes Fenster (220) zwischen der Bahn (204) und dem Äußeren der Gondel (102) zu definieren, translatorisch bewegbar ist, und
- einen Satz von Aktoren, die die Bewegung des Schiebers (218) zwischen der vorgeschobenen Position und der zurückgezogenen Position und umgekehrt gewährleisten, wobei das Zweistrom-Turbinenstrahltriebwerk (100) **dadurch gekennzeichnet ist, dass** die Gondel (102) ferner Folgendes umfasst:
- mehrere Blätter (250), die jeweils ein erstes Ende aufweisen, das um eine Drehachse drehbar am Schieber (218) montiert ist, wobei die Blätter (250) um die Längsachse (X) herum nach und nach winkelmäßig versetzt sind, wobei jedes Blatt (250) zwischen einer eingefahrenen Position, in der sich das Blatt (250) außerhalb der Bahn (204) befindet, und einer ausgefahrenen Position, in der sich das Blatt (250) quer zur Bahn (204) befindet, bewegbar ist, und
- ein Betätigungssystem (400), das dazu bestimmt ist, jedes Blatt (250) aus der eingefahrenen Position in die ausgefahrene Position und umgekehrt zu bewegen, wobei das Betätigungssystem (400) Folgendes aufweist:
- für jedes Blatt (250) eine Welle (402), die um eine Drehachse (404) drehbar am Schieber (218) montiert ist und an der das Blatt (250) befestigt ist,
- für jede Welle (402) einen Arm (414), der ein an der Welle (402) befestigtes erstes Ende und ein zweites Ende aufweist,
- einen Bogen (408), der koaxial zur Längsachse (X) verläuft und um die Längsachse (X) drehbar am Schieber (218) montiert ist,
- für jeden Arm (414) einen Hebel (406), der gelenkig zwischen dem Bogen (408) und dem zweiten Ende des Arms (414) montiert ist, und
- ein Antriebssystem, das die Drehung des Bogens (408) in eine Richtung und in die andere Richtung bewirkt.

2. Zweistrom-Turbinenstrahltriebwerk (100) nach Anspruch 1, **dadurch gekennzeichnet, dass** das erste Ende jedes Arms (414) die Form eines Paars von Backen (419) aufweist, die die Welle (402) umfassen und eine Spannschraube (421) aufweisen, die die beiden Backen zusammenzieht.

3. Luftfahrzeug (10), umfassend zumindest ein Zweistrom-Turbinenstrahltriebwerk (100) nach einem der vorangehenden Ansprüche.

## Claims

1. Turbofan (100) having a longitudinal axis (X) and comprising a motor (20) and a nacelle (102), surrounding the motor (20), which comprises a fan casing (202), in which a duct (204) for a bypass flow (208) is delimited between the nacelle (102) and the motor (20) and in which a flow of air flows in a flow direction, said nacelle (102) comprising:
- a fixed structure (206) fixed to the fan casing (202),
- a mobile assembly (214) having a mobile cowl (216) and a slider (218), the mobile cowl (216) being fixed to the slider (218), the slider (218) being mobile in translation on the fixed structure (206), in a direction of translation between an advanced position in which the slider (218) is positioned such that the mobile cowl (216) is moved close to the fan casing (202) and a retracted position in which the slider (218) is positioned such that the mobile cowl (216) is moved away from the fan casing (202) so as to define, between them, an open window (220) between the duct (204) and the exterior of the nacelle (102), and
- a set of actuators causing the slider (218) to move between the advanced position and the retracted position, and vice versa,
the turbofan (100) being **characterized in that** the nacelle (102) comprises also:
- a plurality of blades (250), each one comprising a first end mounted so as to be mobile in rotation on the slider (218) about an axis of rotation, and where the blades (250) are angularly offset from one to the next about the longitudinal axis (X), wherein each blade (250) is mobile between a stowed position in which the blade (250) is outside the duct (204) and a deployed position in which the blade (250) is across the duct (204), and
- a manoeuvring system (400) intended to move each blade (250) from the stowed position to the deployed position and vice versa, where the manoeuvring system (400) comprises:
- for each blade (250), a shaft (402) mounted so as to be mobile in rotation on the slider (218) about an axis of rotation (404), and on which the blade (250) is fixed,
- for each shaft (402), an arm (414) which has a first end fixed to the shaft (402) and a second end,
- an arc (408) which is coaxial with the longitudinal axis (X) and is mounted so as to be mobile in rotation, on the slider (218), about the longitudinal axis (X),
- for each arm (414), a lever (406) mounted in articulated fashion between the arc (408) and the second end of the arm (414), and
- an actuation system which rotates the arc (408) in one direction and in the other.

2. Turbofan (100) according to Claim 1, **characterized in that** the first end of each arm (414) takes the form of a pair of pincers (419) that grip the shaft (402) and comprise a tightening screw (421) that tightens the two pincers towards one another.

3. Aircraft (10) comprising at least one turbofan (100) according to one of the preceding claims.
